# EUROPEAN PATENT SPECIFICATION

(11) **EP 2 184 742 B1**
(45) Date of publication and mention of the grant of the patent: **07.01.2015**
(21) Application number: 08305784.4
(22) Date of filing: 07.11.2008
(51) Int. Cl.: G21C 3/12, G21C 5/06, G21C 19/20

(54) **Tie plate and corresponding fuel assembly**
Ankerplatte und mit einer derartigen Ankerplatte versehenes Brennstabbündel
Plaque de fixation et assemblage de combustible comportant une telle plaque

(43) Date of publication of application: 12.05.2010
(73) Proprietor: Areva NP, 92400 Courbevoie (FR)
(72) Inventor: Friedrich, Erhard, 90542 Eckental (DE); Schneider, Manfred, 63814 Mainaschaff (DE)
(74) Representative: Domenego, Bertrand

(56) References cited:
- EP-A- 0 543 253
- US-A- 4 127 445
- US-A- 5 488 634
- US-A- 5 490 190
- US-A- 5 812 624
- US-A1- 2006 068 629

## Description

The present invention relates to a tie plate according to the preamble of claim 1.

Such a tie plate is disclosed by US-5 812 624, EP 0 543 253, EP 0 669 624 and US-5 490 190.

A pressurized water reactor (PWR) nuclear fuel assembly generally comprises a skeleton and a bundle of fuel rods. The skeleton comprises a lower tie plate, an upper tie plate, guide-tubes connecting said lower and upper tie plates and spacer grids maintaining the fuel rods.

Once loaded into a fuel reactor, the lower tie plate of the nuclear fuel assembly rests on a lower core plate. The lower tie plate receives positioning pins which project upwardly from the lower core plate. These positioning pins are received in positioning holes usually provided in feet of the lower tie plate.

The upper tie plate is also provided with positioning holes which receive upper positioning pins projecting downwardly from an upper core plate.

The positioning holes may also receive positioning pins projecting from the handling grippers used to insert and remove the fuel assembly from a nuclear rector core or from a storage cell.

During refueling or during some service operations of the nuclear reactor, the upper core plate is removed and reinstalled once the necessary operations have been performed on the nuclear core.

The upper positioning pins serve to position laterally the fuel assemblies of the core accurately with respect to the upper core plate and to the other fuel assemblies of the core.

In order to ease the insertion of the upper positioning pins and compensate for misalignments, the positioning holes of each upper tie plate have a lower maintaining portion and an upper guiding portion which opens in an upper end surface of the upper tie plate.

Each upper guiding portion is connected to the upper end surface of the upper tie plate by a capture contour. During the upper core plate installation, and in case of a misalignment of an upper positioning pin with its respective positioning hole, the lower end of the upper positioning pin slides on the guiding portion and is thus guided into the maintaining portion.

The positioning holes of each lower tie plate have a similar function and consequently a similar shape.

Usually, the positioning holes are obtained by machining the tie plate. The maintaining portions exhibit a cylindrical shape with a circular basis and the guiding portions have a frustoconical shape.

The guiding portions are efficient to compensate for misalignments between the positioning pins and the corresponding alignment holes.

However, if the misalignment is too large, then the guiding portions are not able to guide the positioning pins into the maintaining portions. The misaligned positioning pins can thus be bent and wedged into their respective positioning holes. This could lead to various problems, including an unexpected lifting of the corresponding fuel assembly by the upper core plate during the next refueling operation.

This is of concern especially since nuclear reactors are operated in ways that may more and more lead to fuel assembly deformations and therefore greater misalignment risks.

The goal of the invention is to solve this problem by reducing further the risks of defective engagement between a core plate and a fuel assembly tie plate.

To this end, the invention relates to a nuclear core according to claim 1.

Preferred embodiments comprise features of any of claims 2 to 4.
- Fig. 1 is a schematic partial view of a conventional PWR nuclear core,
- Fig. 2 is a partial enlarged perspective view of an upper tie plate according to the invention,
- Fig. 3 is a partial schematic top view showing the capture contour of a positioning hole of the upper tie plate of Fig. 2.

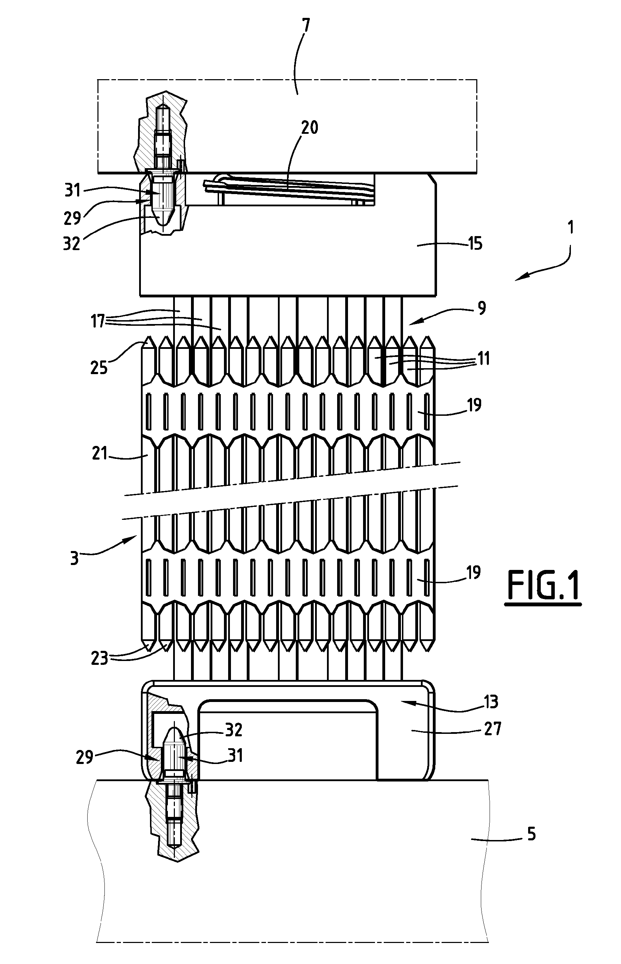

As shown on Fig. 1, a nuclear core 1 of a PWR generally comprises nuclear fuel assemblies 3 which extend vertically between a lower core plate 5 and an upper core plate 7. Only one assembly 3 is shown on Fig. 1, but the core usually comprises e.g. between 150 to 220 fuel assemblies 3 placed side-by-side in a substantially circular pattern.

Each fuel assembly 3 comprises a skeleton 9 and a bundle of fuel rods 11. The skeleton 9 comprises a lower tie plate 13, an upper tie plate 15, guide-tubes 17 connecting said lower and upper tie plates 13 and 15, and spacer grids 19 maintaining the fuel rods 11 according to a predetermined pattern. The guide-tubes 17 are intended to receive control rods.

Each fuel rod 11 generally includes nuclear fuel pellets received in a cladding 21 sealed by a lower end plug 23 and an upper end plug 25.

The lower tie plate 13 has feet 27 resting on the lower core plate 5. Two of these feet 27 are provided with lower positioning holes 29 which extend vertically and which receive lower positioning pins 31 projecting upwardly from the lower core plate 5.

The upper tie plate 15 has springs 20 contacting the upper core plate 7.

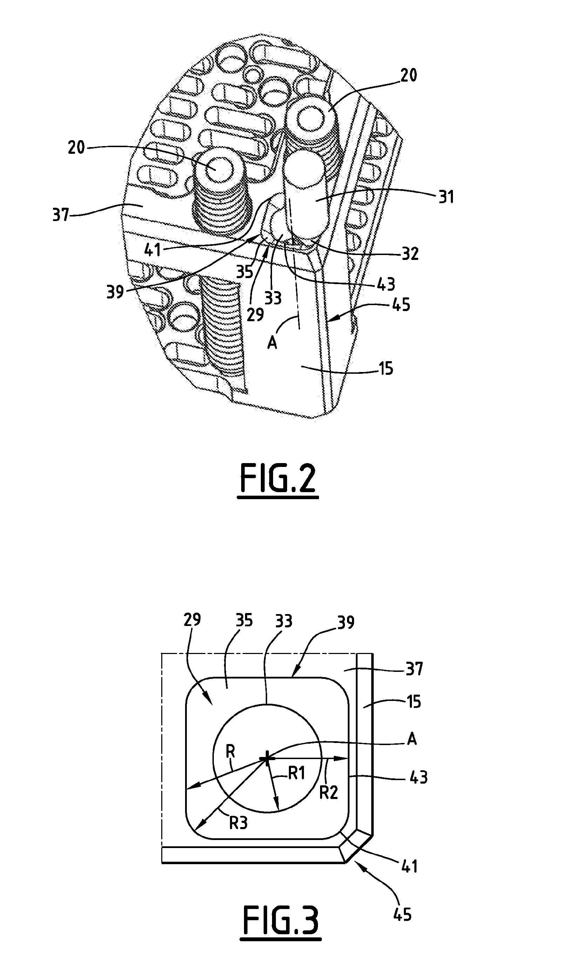

It should be noted that the conventional upper tie plate 15 of Fig. 1 and the upper tie plate 15 of Fig. 2 are not provided with the same type of springs 20. However, any type of springs 20, or even no spring, can be used with the invention.

Upper positioning pins 31 extend downwardly from the upper core plate 7 to be received into upper positioning holes 29 provided into the upper tie plate 15.

In order to ease their introduction into their respective positioning holes 29, the lower and upper positioning pins 31 have tapering ends 32.

Generally, the tie plates 13 and 15 each have a substantially square basis with two positioning holes 29 provided at diagonally opposed corners of the tie plates. However, any number of positioning holes 29, and therefore of positioning pins 31, can be contemplated.

In the disclosed embodiment, all the upper positioning holes 29 have the same structure. Therefore, only one upper positioning hole 29 will be disclosed in more details with reference to Figs. 2 and 3.

The upper positioning hole 29 extends along a vertical central axis A and surrounds the vertical axis A. The upper positioning hole 29 has a lower maintaining portion 33 and an upper guiding portion 35. The lower maintaining portion 33 has a cylindrical shape around axis A with a circular basis of radius R1 (see Fig. 3) in order to closely surround the respective positioning pin 31.

The upper guiding portion 35 surrounds the axis A and opens into the upper end surface 37 of the upper tie plate 15. The upper guiding portion 35 connects to the upper end surface 37 through a capture contour 39. The upper guiding portion 35 widens radially from the lower maintaining portion 33 to the upper end surface 37. This widening takes place in each radial direction. The capture contour 39 therefore has a larger cross section than the lower maintaining portion 33 and the radial distance R between the central axis A and any part of the capture contour 39 is therefore strictly greater than R1.

In the embodiment shown on Figs. 2 and 3, the capture contour 39 has a substantially square shape with rounded corners 41. The lowest value of R is R2 and corresponds to the sides 43 of the capture contour 39. The highest value of R is R3 and corresponds to the corners 41 of the capture contour 39. Therefore, at least a part of the capture contour 39 has a radial distance with respect to the central axis greater than another part.

During the upper core plate 7 installation, and in case of a misalignment between the upper positioning hole 29 and the corresponding upper positioning pin 31, the upper positioning pin 31 will engage the lateral wall of the upper guiding portion 35 and slide within the lower maintaining portion 33.

The radial distance R3 being greater than R2, the upper guiding portion 35 can compensate for greater misalignment in the corners 41 despite the narrow space available in the corner 45 of the upper tie plate 15 where the upper positioning hole 29 is placed.

Therefore, the risk of a misengagement of fuel assembly 3 and the upper core plate 7 after a refueling or a service operation is reduced.

This helps reducing the time of fuel assembly handling during a refueling or a service operation.

Other non-circular shapes than a square shape can be contemplated for the capture contour 39, e.g. polygonal shapes, oval shapes...

The above disclosed improved positioning holes 29 may be implemented in lower tie plates.

## Claims

1. A pressurized water reactor nuclear core (1) comprising:
- a nuclear core plate (5, 7) having at least one positioning pin (31) projecting from said nuclear core plate (5, 7), and
- a tie plate (13, 15) of a nuclear fuel assembly (3), said tie plate (15) having at least one positioning hole (29) for receiving and surrounding said positioning pin (31), the positioning hole (29) extending along a central axis (A) and having a maintaining portion (33) and a guiding portion (35), the guiding portion (35) widening radially in each radial direction from the maintaining portion (33) to an end surface (37) of the tie plate (15), the guiding portion (35) being connected to the end surface (37) by a capture contour (39),
**characterized in that** said capture contour (39) is substantially polygonal and has at least a part (41) having a radial distance (R3) with respect to the central axis (A) greater than a radial distance (R2) of another part (43).

2. A nuclear core (1) according to claim 1, wherein said capture contour (39) is substantially square.

3. A nuclear core (1) according to claim 1 or 2, wherein said capture contour (39) has rounded corners (41).

4. A nuclear core (1) according to any of claims 1 to 3, comprising a nuclear fuel assembly (3) having a skeleton (9) and a bundle of fuel rods (11), said skeleton (9) comprising a lower tie plate (13), an upper tie plate (15), guide-tubes (17) connecting said lower and upper tie plates (13, 15), and spacer grids (19) maintaining the fuel rods (11), **characterized in that** at least one of upper (15) and lower (13) tie plate is a tie plate having at least one positioning hole (29) for receiving and surrounding a positioning pin (31) projecting from a nuclear core plate (7), the positioning hole (29) extending along a central axis (A) and having a maintaining portion (33) and a guiding portion (35), the guiding portion (35) widening radially in each radial direction from the maintaining portion (33) to an end surface (37) of the tie plate (15), the guiding portion (35) being connected to the end surface (37) by a capture contour (39), said capture contour (39) being substantially polygonal and having at least a part (41) having a radial distance (R3) with respect to the central axis (A) greater than a radial distance (R2) of another part (43).

## Patentansprüche

1. Druckwasserreaktor-Nuklearkern (1), welcher aufweist:
- eine Nuklearkernplatte (5, 7) mit zumindest einem Positionierungsstift (31), der von der Nuklearkernplatte (5, 7) vorsteht, und
- eine Ankerplatte (13, 15) einer Nuklearbrennstoffanordnung (3), wobei die Ankerplatte (15) zumindest ein Positionierungsloch (29) zum Empfangen und zum Umgeben des Positionierungsstifts (31) hat, das Positionierungsloch (29) sich entlang einer mittleren Achse (A) erstreckt und einen Bewahrungsbereich (33) und einen Führungsbereich (35) hat, welcher Führungsbereich (35) sich in jeder radialen Richtung von dem Bewahrungsbereich (33) aus radial bis zu einer Endfläche (37) der Ankerplatte (15) hin erweitert und welcher Führungsbereich (35) durch eine Einfangkontur (39) mit der Endfläche (37) verbunden ist,
**dadurch gekennzeichnet, dass** die Einfangkontur (39) im Wesentlichen polygonal ist und zumindest einen Teil (41) mit einem radialen Abstand (R3) in Bezug auf die mittlere Achse (A) hat, der größer als ein radialer Abstand (R2) eines anderen Teils (43) ist.

2. Nuklearkern (1) nach Anspruch 1, bei dem die Einfangkontur (39) im Wesentlichen quadratisch ist.

3. Nuklearkern (1) nach Anspruch 1 oder 2, bei dem die Einfangkontur (39) gerundete Ecken (41) hat.

4. Nuklearkern (1) nach einem der Ansprüche 1 bis 3, aufweisend eine Nuklearbrennstoffanordnung (3) mit einem Gerüst (9) und einem Bündel aus Brennstoffstäben (11), welches Gerüst (9) eine untere Ankerplatte (13), eine obere Ankerplatte (15), Führungsrohre (17), die die untere und obere Ankerplatte (13, 15) verbinden, und Abstandshaltergitter (19), die die Brennstoffstäbe (11) halten, aufweist, **dadurch gekennzeichnet, dass** zumindest eine von der oberen (15) und der unteren (13) Ankerplatte eine Ankerplatte ist, die zumindest ein Positionierungsloch (29) zum Empfangen und Umgeben eines Positionierungsstifts (31), der von einer Nuklearkernplatte (7) vorsteht, hat, das Positionierungsloch (29) sich entlang einer mittleren Achse (A) erstreckt und einen Bewahrungsbereich (33) und einen Führungsbereich (35) hat, wobei sich der Führungsbereich (35) radial in jeder radialen Richtung von dem Bewahrungsbereich (33) aus zu einer Endfläche (37) der Ankerplatte (15) erweitert, der Führungsbereich (35) durch eine Einfangkontur (39) mit der Endfläche (37) verbunden ist, die Einfangkontur (39) im Wesentlichen polygonal ist und zumindest einen Teil (41) mit einem radialen Abstand (R3) in Bezug auf die mittlere Achse (A) hat, der größer als ein radialer Abstand (R2) eines anderen Teils (43) ist.

## Revendications

1. Coeur (1) de réacteur à eau sous pression (1) comprenant :
une plaque de coeur (5, 7) ayant au moins une broche de positionnement (31) faisant saillie de ladite plaque de coeur (5, 7), et
une plaque de fixation (13, 15) d'un assemblage combustible nucléaire (3), ladite plaque de fixation (15) ayant au moins un trou de positionnement (29) pour recevoir et entourer ladite broche de positionnement (31), le trou de positionnement (29) s'étendant le long d'un axe central (A) et ayant une partie de maintien (33) et une partie de guidage (35), la partie de guidage (35) s'élargissant radialement dans chaque direction radiale à partir de la partie de maintien (33) jusqu'à une surface d'extrémité (37) de la plaque de fixation (15), la partie de guidage (35) étant raccordée à la surface d'extrémité (37) par un contour de capture (39),
**caractérisé en ce que** ledit contour de capture (39) est sensiblement polygonal et a au moins une partie (41) ayant une distance radiale (R3) par rapport à l'axe central (A) supérieure à une distance radiale (R2) d'une autre partie (43).

2. Coeur (1) selon la revendication 1, dans lequel ledit contour de capture (39) est sensiblement carré.

3. Coeur (1) selon la revendication 1 ou 2, dans lequel ledit contour de capture (39) a des coins arrondis (41).

4. Coeur (1) selon l'une quelconque des revendications 1 à 3, comprenant un assemblage combustible nucléaire (3) ayant une carcasse (9) et un faisceau de barres de combustible (11), ladite carcasse (9) comprenant une plaque de fixation inférieure (13), une plaque de fixation supérieure (15), des tubes de guidage (17) raccordant lesdites plaques de fixation supérieure et inférieure (13, 15), et des grilles d'écartement (19) maintenant les barres de combustible (11), **caractérisé en ce qu'**au moins l'une parmi la plaque de fixation supérieure (15) et la plaque de fixation inférieure (13) est une plaque de fixation ayant au moins un trou de positionnement (29) pour recevoir et entourer une broche de positionnement (31) faisant saillie d'une plaque de coeur (7), le trou de positionnement (29) s'étendant le long d'un axe central (A) et ayant une partie de maintien (33) et une partie de guidage (35), la partie de guidage (35) s'élargissant radialement dans chaque direction radiale à partir de la partie de maintien (33) jusqu'à une surface d'extrémité (37) de la plaque de fixation (15), la partie de guidage (35) étant raccordée à la surface d'extrémité (37) par un contour de capture (39), ledit contour de capture (39) étant sensiblement polygonal et ayant au moins une partie (41) ayant une distance radiale (R3) par rapport à l'axe central (A) supérieure à une distance radiale (R2) d'une autre partie (43).
